(19) **Europäisches Patentamt**
**European Patent Office**
**Office européen des brevets**

(11) **EP 2 520 674 B1**

(12) **EUROPEAN PATENT SPECIFICATION**

(45) Date of publication and mention
of the grant of the patent:
**29.05.2019 Bulletin 2019/22**

(51) Int Cl.:
***C21B 13/00*** *(2006.01)*     ***C21B 11/00*** *(2006.01)*
***C21B 13/14*** *(2006.01)*

(21) Application number: **10841109.1**

(22) Date of filing: **19.08.2010**

(86) International application number:
**PCT/KR2010/005483**

(87) International publication number:
**WO 2011/081276 (07.07.2011 Gazette 2011/27)**

(54) **APPARATUS FOR MANUFACTURING MOLTEN IRON**

VORRICHTUNG ZUR HERSTELLUNG VON EISENSCHMELZE

APPAREIL DE FABRICATION DE FONTE DE FER

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **28.12.2009 KR 20090131399**

(43) Date of publication of application:
**07.11.2012 Bulletin 2012/45**

(73) Proprietor: **POSCO**
**Pohang-shi**
**Kyeongsangbuk-do 790-300 (KR)**

(72) Inventors:
• **JUNG, Jong-hwun**
  **Pohang-shi**
  **Kyungsangbuk-do 790-300 (KR)**
• **KIM, Ki-Hyun**
  **Pohang-shi**
  **Kyungsangbuk-do 790-300 (KR)**

• **SHIN, Myoung-Kyun**
  **Pohang-shi**
  **Kyungsangbuk-do 790-300 (KR)**
• **LEE, Si-Hyung**
  **Pohang-shi**
  **Kyungsangbuk-do 790-300 (KR)**
• **KIM, Sung-Man**
  **Pohang-shi**
  **Kyungsangbuk-do 790-300 (KR)**

(74) Representative: **Potter Clarkson**
**The Belgrave Centre**
**Talbot Street**
**Nottingham NG1 5GG (GB)**

(56) References cited:
**WO-A1-2008/075870**    **WO-A1-2008/078891**
**WO-A2-2009/037587**    **CN-A- 101 219 929**
**JP-A- H 059 140**    **JP-A- 2004 225 117**
**JP-A- 2004 309 067**    **JP-A- 2009 120 897**
**KR-A- 20020 051 016**    **US-A- 5 397 376**

**Description**

**CROSS-REFERENCE TO RELATED APPLICATION**

This application claims priority to and the benefit of Korean Patent Application No. 10-2009-0131399 filed in the Korean Intellectual Property Office on December 28, 2009.

**BACKGROUND OF THE INVENTION**

**(a) Field of the Invention**

The present invention relates to an apparatus for manufacturing molten iron. More particularly, the present invention relates to an apparatus for manufacturing molten iron which can reduce an amount of generated carbon dioxide and produce a liquid fuel and electrical energy in molten iron manufacturing process.

**(b) Description of the Related Art**

Off-gases generated during a molten iron manufacturing process are harmful to the environment, and are undesirable in aspects of resource and energy efficiency as recyclable substances are wasted if discharged into the atmosphere as they are.

Further, carbon dioxide contained in off-gases causes climate changes, and needs to be retrieved and recycled.

The above information disclosed in this Background section is only for enhancement of understanding of the background of the invention and therefore it may contain information that does not form the prior art that is already known in this country to a person of ordinary skill in the art.

WO2008/078891 discloses an apparatus and method for manufacturing molten iron while reusing an off-gas of the packed bed reduction reactor and improving energy efficiency. A method for manufacturing molten iron includes i) charging fine ore into at least one fluidized-bed reduction reactor and manufacturing reduced iron; ii) compacting the reduced iron and manufacturing compacted reduced iron; iii) charging the reduced iron into a packed bed reduction reactor and reducing the reduced iron again; iv) charging the re-reduced iron into a melter-gasifier; v) charging lumped carbonaceous materials into the melter-gasifier and forming a coal packed bed in the melter-gasifier; vi) injecting oxygen into the melter-gasifier and combusting the coal packed bed, thereby melting the re-reduced iron and manufacturing molten iron; and vii) supplying an off-gas that is discharged from the packed bed reduction reactor to the fluidized-bed reduction reactor.

WO2009/037587 discloses a method and apparatus for producing a metallized product (DRI) in a downstream direct reduction reactor utilizing the reducing gas effluent either from an upstream reduction reactor associated with a melter-gasifier or from the melter-gasifier itself (in the absence of such upstream reduction reactor), wherein said reducing gas is reacted with water in a shifter and then $CO_2$ is removed from a combined stream of said shifted gas with recycled gas effluent from said downstream reactor in an adsorption $CO_2$ removal unit. Separation of $CO_2$ produces a lean gas stream and a $CO_2$ laden gas stream. The $CO_2$ lean gas stream is utilized for producing DRI in said downstream reduction reactor and the $CO_2$ laden gas stream is used as fuel in a boiler for producing steam which serves then at least to react with carbon monoxide in said shifter to produce hydrogen and preferably also for power generation.

JP-H-059140 discloses a method for utilizing combustible gas generated in a melted pig iron producing installation. The method comprises subjecting a combustible gas exhausted from a melted pig iron producing installation in a large volume to a cooling and dust-removing process in a gas washing installation. Subsequently the combustible gas is subjected to the removal of most sulfur compounds and carbon dioxide in a desulfurization installation, and then to condensation and removal of most water to provide the combustible gas with a low degree of oxidation. A part of the combustible gas is taken out as a gas for reducing the iron ore. The remaining gas is supplied to a CO-shift reaction installation to enrich hydrogen gas in the gas which is then subjected to a carbon dioxide-removing treatment and subsequently supplied to a methanol-synthesizing installation to utilize the gas as a rare material for the synthesis of methanol.

**SUMMARY OF THE INVENTION**

The present invention has been made in an effort to provide an apparatus for manufacturing molten iron having advantages of reducing an amount of carbon dioxide generated in molten iron manufacturing process and recycling the generated carbon dioxide.

Further, the present invention has been made in an effort to provide an apparatus for manufacturing molten iron which can produce a liquid fuel and electrical energy in an iron manufacturing process.

An exemplary embodiment of the present invention provides an apparatus for manufacturing molten iron, comprising: a melter-gasifier for producing molten iron and generating off-gases; a carbon dioxide reforming unit for reforming the off-gases and generating hydrogen and carbon monoxide; an iron ore reducing unit for receiving the hydrogen and the carbon dioxide to reduce iron ore; an off-gas refining facility installed between the melter-gasifier and the carbon dioxide reforming unit, and a steam reforming unit installed between the melter-gasifier and the carbon dioxide reforming unit.

The apparatus for manufacturing molten iron further comprises an off-gas refining facility installed between the melter-gasifier and the carbon dioxide reforming unit, wherein the off-gas refining facility may refine harmful substances in the off-gases. Further, the off-gas refining facility may comprise at least one of a cyclone, a filter, and a scrubber.

The apparatus for manufacturing molten iron may further comprise a gas distributing unit installed between the carbon dioxide reforming unit and the iron ore reducing unit, wherein the gas distributing unit may supply some of the hydrogen and the carbon monoxide generated by the carbon dioxide reforming unit to the melter-gasifier and supply the remaining hydrogen and carbon monoxide to the iron ore reducing unit.

The apparatus for manufacturing molten iron may further comprise a first heat exchanger, wherein the first heat exchanger may supply heat generated by the melter-gasifier to the carbon dioxide reforming unit.

The apparatus for manufacturing molten iron may further comprise a steam separating unit connected to the iron ore reducing unit, wherein the steam separating unit may separate and remove water generated by the iron ore reducing unit.

The apparatus for manufacturing molten iron may further comprise an electric power generating unit connected to the steam separating unit, wherein the electric power generating unit may receive steam and mixed gas from the steam separating unit to produce electrical energy. Further, the electric power generating unit may be a turbine.

The apparatus for manufacturing molten iron may further comprise a liquid fuel producing unit connected to the iron ore reducing unit, wherein the liquid fuel producing unit may receive mixed gas from the iron ore reducing unit and produce liquid fuel. Meanwhile, the liquid fuel produced by the liquid fuel producing unit may comprise at least one of methanol, di-methyl ether, and hydrocarbon. Further, the liquid fuel producing unit may be a slurry reactor.

The apparatus for manufacturing molten iron may further comprise a second heat exchanger, wherein the second heat exchanger may supply heat generated by the liquid fuel producing unit to the carbon dioxide reforming unit.

The apparatus for manufacturing molten iron may further comprise a compressor installed between the iron ore reducing unit and the liquid fuel producing unit.

The apparatus for manufacturing molten iron may further comprise an electric power generating unit connected to the liquid fuel producing unit, wherein the electric power generating unit may receive steam and mixed gas from the liquid fuel producing unit and produce electrical energy. The electric power generating unit may be a turbine.

The apparatus for manufacturing molten iron may further comprise a carbon dioxide separating unit installed between the liquid fuel producing unit and the electric power generating unit, wherein the carbon dioxide separating unit may separate carbon dioxide from the mixed gas and send the carbon dioxide to the carbon dioxide reforming unit. The carbon dioxide separating unit may be a PSA unit, or may separate carbon dioxide by using one of a cryogenic process, an ammonia/amine adsorbing process, an adsorbent using process, an MOF, and a membrane separation process.

The apparatus for manufacturing molten iron optionally may comprise: a second iron ore reducing unit for reducing iron ore and manufacturing reduced iron; wherein the melter-gasifier is supplied from the second iron ore reducing unit with the reduced iron

The apparatus for manufacturing molten iron may further comprise an off-gas refining facility installed between the melter-gasifier and the carbon dioxide reforming unit, wherein the off-gas refining facility may refine harmful substances in the off-gases.

The apparatus for manufacturing molten iron may further comprise a gas distributing unit installed between the carbon dioxide reforming unit and the first and second iron ore reducing units, wherein the gas distributing unit may supply some of the hydrogen and the carbon monoxide generated by the carbon dioxide reforming unit to the first iron ore reducing unit and supply the remaining hydrogen and carbon monoxide to the second iron ore reducing unit.

The first iron ore reducing unit or the second iron ore reducing unit may be a fluidized-bed reduction furnace.

According to the exemplary embodiments of the present invention, it is possible to reduce an amount of carbon dioxide generated in an iron manufacturing process and recycle the generated carbon dioxide.

Further, according to the exemplary embodiments of the present invention, it is possible to produce a liquid fuel and electrical energy in an iron manufacturing process.

## BRIEF DESCRIPTION OF THE DRAWINGS

FIG. 1 is a schematic diagram showing an apparatus for manufacturing molten iron.

FIG. 2 is a schematic diagram showing an apparatus for manufacturing molten iron according to a first exemplary embodiment of the present invention.

FIG. 3 is a schematic diagram showing an apparatus for manufacturing molten iron according to a second exemplary embodiment of the present invention.

FIG. 4 is a schematic diagram showing an apparatus for manufacturing molten iron according to a third exemplary embodiment of the present invention.

FIG. 5 is a schematic diagram showing an apparatus for manufacturing molten iron.

FIG. 6 is a schematic diagram showing an apparatus for manufacturing molten iron.

FIG. 7 is a schematic diagram showing an apparatus for manufacturing molten iron.

FIG. 8 is a schematic diagram showing an apparatus for manufacturing molten iron according to a fourth exemplary embodiment of the present invention.

## DETAILED DESCRIPTION OF THE EMBODIMENTS

The present invention will be described more fully hereinafter with reference to the accompanying drawings, in which exemplary embodiments of the invention are shown. Accordingly, the drawings and description are to be regarded as illustrative in nature and not restrictive. Like reference numerals designate like elements throughout the specification.

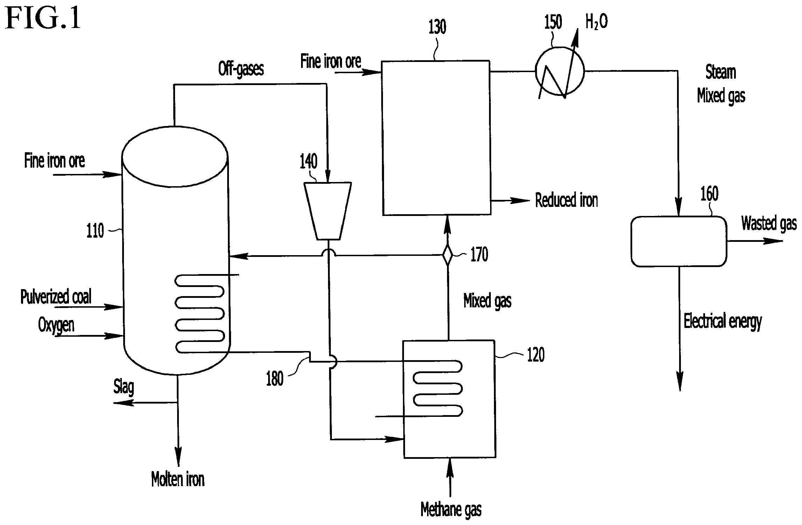

FIG. 1 is a schematic diagram showing an apparatus for manufacturing molten iron.

Referring to FIG. 1, the apparatus for manufacturing molten iron comprises a melter-gasifier 110, a carbon dioxide reformer 120, an iron ore reducing unit 130, a off-gas refining facility 140, a steam separating unit 150, and an electric power generating unit 160.

The melter-gasifier 110 is a facility for producing molten iron and slag and generating off-gases by using an iron-containing material and a carbon-containing material. The iron-containing material may be iron ore and the carbon-containing material may be coal.

Iron-containing material is reduced by carbon monoxide (CO) and hydrogen ($H_2$) in the melter-gasifier 110, and reduction reactions of iron-containing material are represented by Chemical Formulas 1 and 2 as follows.

$$\frac{1}{3} Fe_2O_3 + CO = \frac{2}{3} Fe + CO_2 \quad (1)$$

$$\frac{1}{3} Fe_2O_3 + H_2 = \frac{2}{3} Fe + H_2O \quad (2)$$

The $H_2$/CO mol ratio of the off-gases may be more than 0.5 at a temperature of 350 °C or higher.

The off-gases are supplied to the carbon dioxide refoming unit 120 via the off-gas refining facility 140. The off-gas refining facility 140 is installed between the melter-gasifer 110 and the carbon dioxide reforming unit 120, and is a facility for removing harmful substances contained in the off-gases, such as particulates, nitrogen oxides (NOx), sulfur oxides (SOx), and mercury. The off-gas refining facility 140 removes harmful substances by using a cyclone, a filter, or a scrubber.

The carbon dioxide reforming unit 120 reforms off-gases and generates hydrogen and carbon monoxide. That is, the carbon dioxide reforming unit 120 is a unit for bringing methane and carbon dioxide into reaction and generating hydrogen and carbon monoxide, and the reforming reaction is represented by Chemical Formula 3 as follows.

$$CH_4 + CO_2 \rightarrow CO + H_2 \quad (3)$$

A fluidized-bed reactor may be used as the carbon dioxide reforming unit 120. By using a fluidized-bed reactor, catalyst deactivation due to deposition of carbon can be prevented and yields of produced hydrogen and carbon monoxide can be enhanced.

The hydrogen and carbon monoxide generated by the carbon dioxide reforming unit 120 are mixed with off-gases to generate mixed gas, and a ratio of hydrogen to carbon monoxide ($H_2$/CO) in the mixed gas increases.

The mixed gas is supplied to a gas distributing unit 170. The gas distributing unit 170 supplies some of the mixed gas to the melter-gasifier 110 and the remaining mixed gas to the iron ore reducing unit 130.

As the mixed gas supplied to the melter-gasifier is supplied together with heat, an amount of produced molten iron can be further increased.

A first heat exchanger 180 may be installed between the melter-gasifier 110 and the carbon dioxide reforming unit 120. The first heat exchanger 180 supplies the heat generated by the melter-gasifier 110 to the carbon dioxide reforming unit 120.

The iron ore reducing unit 130 is a unit for receiving the mixed gas from the carbon dioxide reforming unit 120 to reduce iron ore and producing reduced iron. That is, the mixed gas serves as a reduction agent in the iron ore reducing unit 130.

The iron ore supplied to the iron ore reducing unit 130 may have average particle size smaller than that of the iron ore supplied to the melter-gasifier 110. For example, fine iron ore or ultra-fine iron ore having an average particle size of not more than 1 mm may be supplied to the iron ore reducing unit 130.

The iron ore reducing unit 130 may be a fluidized-bed reactor which may be operated at a temperature of not less than 700 °C and a pressure of not less than 3 bar. For example, the fluidized-bed reactor may be a bubbling, turbulent, or riser type. A counter-current type fluidized-bed reactor where ultra-fine iron ore descends and a reducing synthetic gas rises may be used.

An amount of iron in the reduced iron can be regulated or a reduction rate of the reduced iron can be increased by connecting several reactors in parallel or in series to extend a stay time of the iron ore in the reactors.

The steam separating unit 150 may be connected to the iron ore reducing unit 130. The steam separating unit 150 can separate and remove the steam generated in iron ore reducing process, and can also retrieve heat.

The electric power generating unit 160 is connected to the steam separating unit 150 to receive the steam and the mixed gas and produce electrical energy. The produced electrical energy may be supplied to each unit constituting the apparatus for manufacturing molten iron. The electric power generating unit 160 may be a turbine.

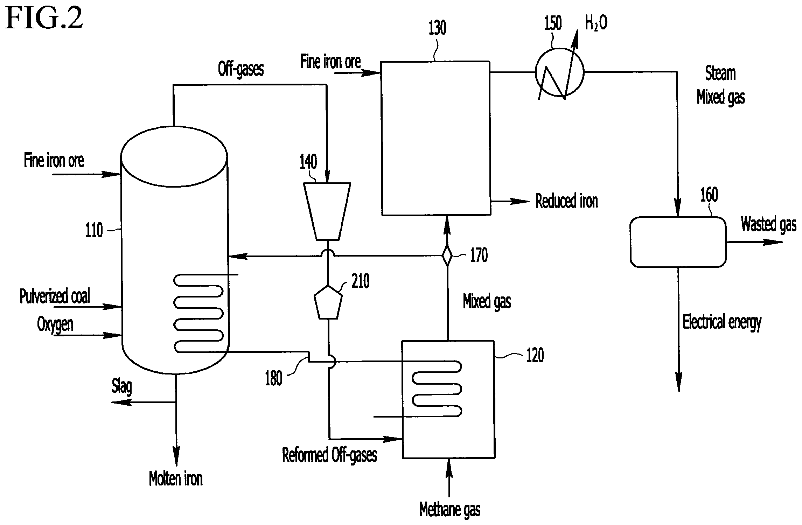

FIG. 2 is a schematic diagram showing an apparatus for manufacturing molten iron according to a first exemplary embodiment of the present invention.

Referring to FIG. 2, the basic elements of the apparatus for manufacturing molten iron according to a first exemplary embodiment of the present invention are the same as those of Figure 1 except that the apparatus for manufacturing molten iron according to the second exemplary embodiment further comprises a steam reforming unit 210.

The steam reforming unit 210 is installed between the melter-gasifier 110 and the carbon dioxide reforming unit 120. The steam reforming unit 210 brings steam in off-gases into reaction with carbon monoxide to generate hydrogen. The reforming reaction is represented by Chemical Formula 4 as follows.

$$H_2O + CO = H_2 + CO_2 \qquad (4)$$

By adding steam into the steam reforming unit 210, an amount of hydrogen can be increased and carbon deposition can be reduced. The steam reforming unit 210 may not only be a fluidized-bed reactor but can also be a fixed-bed reactor. When a fluidized-bed reactor is used, a catalyst regenerating reactor may be installed to compensate, circulate, and regenerate a catalyst.

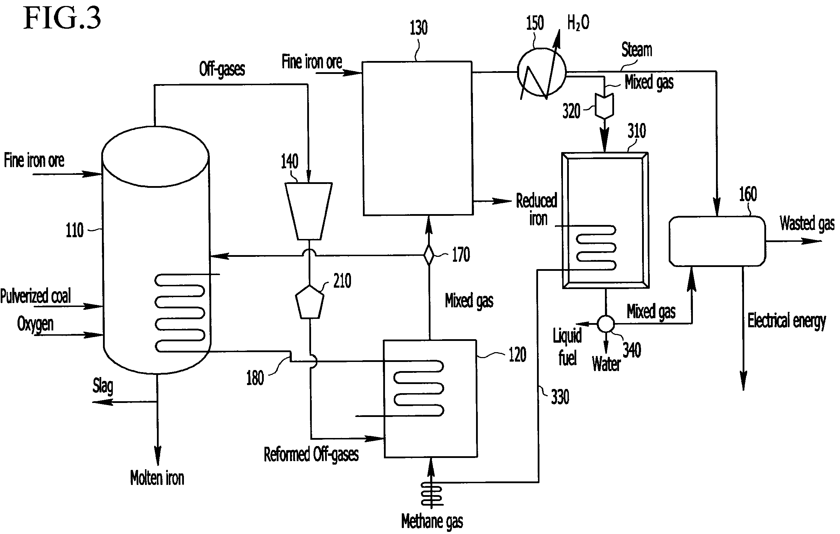

FIG. 3 is a schematic diagram showing an apparatus for manufacturing molten iron according to a second exemplary embodiment of the present invention.

Referring to FIG. 3, the basic elements of the apparatus for manufacturing molten iron according to the third exemplary embodiment of the present invention are the same as those of the first exemplary embodiment except that the apparatus for manufacturing molten iron according to the third exemplary embodiment further comprises a liquid fuel producing unit 310.

The liquid fuel producing unit 310 is connected to the iron ore reducing unit 130 to receive mixed gas and produce a liquid fuel. The steam in the mixed gas generated by the iron ore reducing unit 130 is separated and removed by the steam separating unit 150, and the remaining mixed gas is supplied into the liquid fuel producing unit 310. The remaining mixed gas may be compressed by a compressor 320 before supplied into the liquid fuel producing unit 310.

The produced liquid fuel may be methanol, di-methyl ether, hydrocarbon, etc.

Methanol is finally produced through a hydrogenation reaction of carbon monoxide (CO), a hydrogenation reaction of carbon dioxide ($CO_2$), and a water gas shift reaction. The respective reactions are represented by Chemical Formulas 5 to 7 as follows.

$$CO + 2H_2 \rightarrow CH_3OH \qquad (5)$$

$$CO_2 + 3H_2 \rightarrow CH_3OH + H_2O \qquad (6)$$

$$CO + H_2O \leftrightarrow CO_2 + H_2 \qquad (7)$$

Di-methyl ether may be produced from methanol, and is represented by Chemical Formula 8 as follows.

$$2CH_3OH \rightarrow CH_3OCH_3 + H_2O \qquad (8)$$

A slurry reactor which is one of the fluidized-bed reactors may be used as the liquid fuel producing unit 310 to prevent deactivation of a catalyst due to carbon deposition.

The slurry reactor contains solid-state metallic catalyst and a liquid hydrocarbon wax and off-gases containing carbon dioxide, carbon monoxide, and hydrogen, and the off-gases react with the catalyst to produce a liquid fuel such as methanol.

The liquid hydrocarbon wax is a medium for transferring heat and materials, and a second heat exchanger 330 may be installed to retrieve the heat generated through an exothermic reaction. The second heat exchanger 330 is a unit for retrieving the heat generated by a liquid fuel producing unit 310 and transferring heat to the methane gas supplied to the carbon dioxide reforming unit 120. Thermal efficiency can be increased by an operation of the second heat exchanger 330.

Meanwhile, the structure of the liquid fuel producing unit 310 is not limited to a slurry reactor, and may include a fixed-bed reactor using off-gases and a catalytic layer.

The liquid fuel such as methanol produced by the liquid fuel producing unit 310 and water are separated from each other in a liquid fuel/water separator 340, and the generated mixed gas is supplied to the electric power generating unit 160.

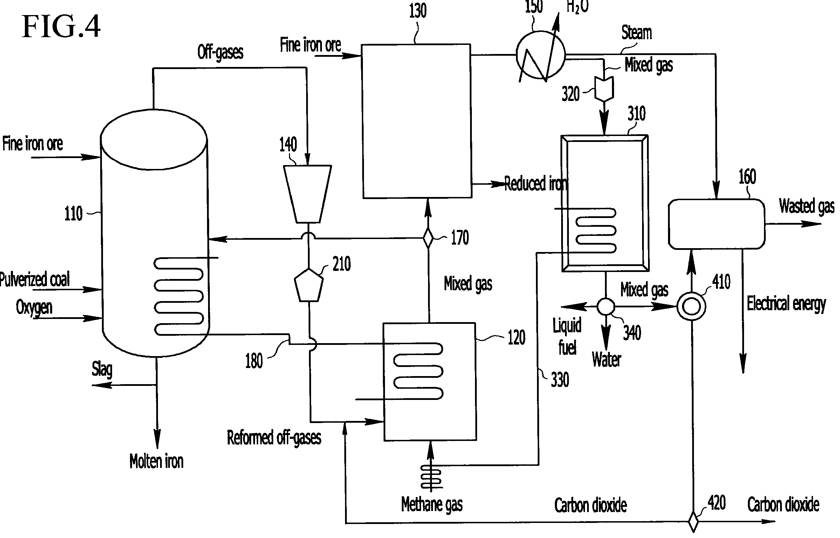

FIG. 4 is a schematic diagram showing an apparatus for manufacturing molten iron according to a third exemplary embodiment of the present invention.

Referring to FIG. 4, the basic elements of the apparatus for manufacturing molten iron according to the fourth exemplary embodiment of the present invention are the same as those of the second exemplary embodiment except that the apparatus for manufacturing molten iron according to the third exemplary embodiment further comprises a carbon dioxide separating unit 410.

The carbon dioxide separating unit 410 is installed between the liquid fuel producing unit 310 and the electric power generating unit 160. The carbon dioxide separating unit 410 separates carbon dioxide from the mixed gas generated by the liquid fuel producing unit 310, and sends the carbon dioxide to a carbon dioxide distributor 420. The carbon dioxide distributer 420 sends some of the carbon dioxide to the carbon dioxide reforming unit 120 and sends the remaining carbon dioxide to a carbon dioxide concentrating and storing unit (not shown).

A pressure swing adsorption (PSA) unit may be used as the carbon dioxide separating unit 410. Further, units using a cryogenic process, an ammonia/amine adsorbing process, an adsorbent using process, a metal organic framework (MOF), and a membrane separation process may be used as the carbon dioxide separating unit 410.

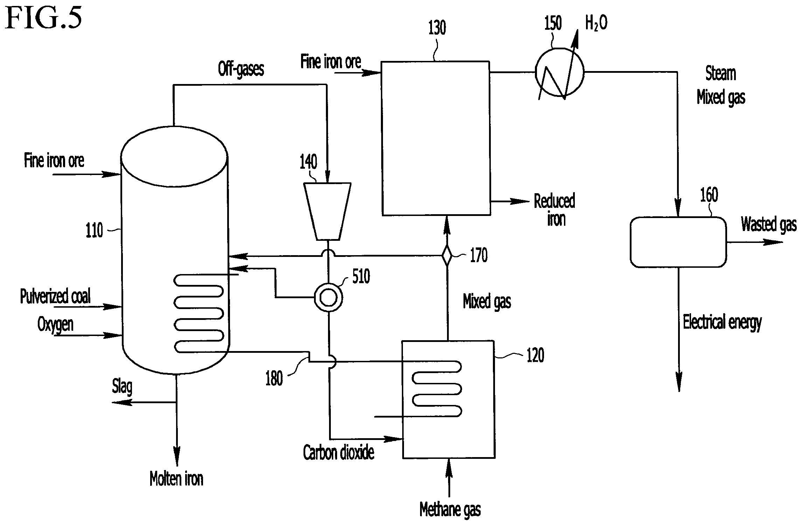

FIG. 5 is a schematic diagram showing an apparatus for manufacturing molten iron.

Referring to FIG. 5, the basic elements of the apparatus for manufacturing molten iron are the same as those of Figure 1 except that the apparatus for manufacturing molten iron of Figure 5 further comprises a carbon dioxide separating unit 510.

The carbon dioxide separating unit 510 is installed between the off-gas refining facility 140 and the carbon dioxide reforming unit 120. The carbon dioxide separating unit 510 retrieves only carbon dioxide from the off-gases and sends the carbon dioxide to the carbon dioxide reforming unit 120, and sends the remaining off-gases to the melter-gasifier 110.

The carbon dioxide separating unit 510 may be a PSA unit. The carbon dioxide separating unit 510 may be a unit for separating carbon dioxide by using one of a cryogenic process, an ammonia/amine adsorbing process, an adsorbent using process, a metal organic framework (MOF), and a membrane separation process.

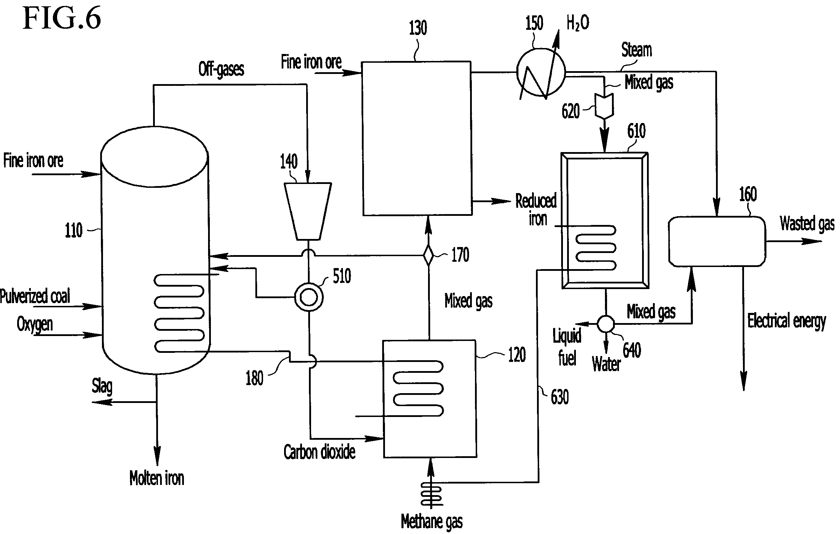

FIG. 6 is a schematic diagram showing an apparatus for manufacturing molten iron.

Referring to FIG. 6, the basic elements of the apparatus for manufacturing molten iron are the same as those of Figure 5 except that the apparatus for manufacturing molten iron of Figure 6 further includes a liquid fuel producing unit 610.

A description of the liquid fuel producing unit 610 is a duplicate of that of the second exemplary embodiment and thus will be omitted.

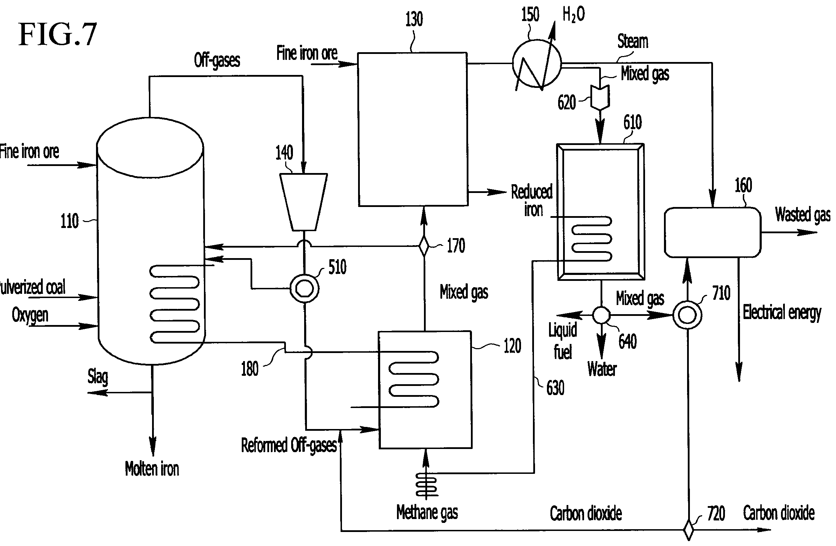

FIG. 7 is a schematic diagram showing an apparatus for manufacturing molten iron.

Referring to FIG. 7, the basic elements of the apparatus for manufacturing molten iron are the same as those of Figure 6 except that the apparatus for manufacturing molten iron of Figure 7 further comprises a carbon dioxide separating unit 710.

A description of the carbon dioxide separating unit 710 is a duplicate of that of the fourth and fifth exemplary embodiments and thus will be omitted.

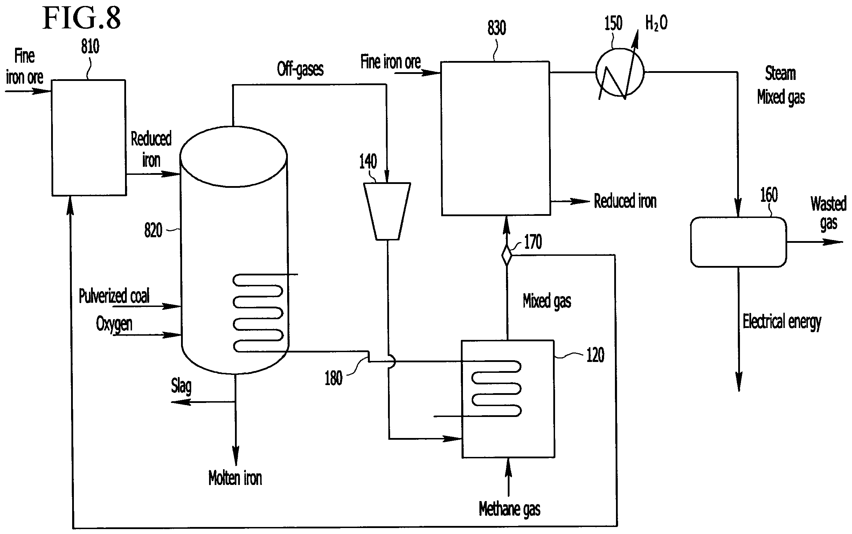

FIG. 8 is a schematic diagram showing an apparatus for manufacturing molten iron according to a fourth exemplary embodiment of the present invention.

A description of the elements similar to or the same as those of the first exemplary embodiment among the elements of the apparatus for manufacturing molten iron according to the fourth exemplary embodiment of the present invention will be omitted.

A second iron ore reducing unit 810 is a unit for reducing iron ore and manufacturing reduced iron. A melter-gasifier 820 receives reduced iron to produce molten iron.

The gas distributing unit 170 supplies some of the hydrogen and carbon monoxide generated by the carbon dioxide reforming unit 120 to the second iron ore reducing unit 810 and supplies the remaining hydrogen and carbon dioxide to a first iron ore reducing unit 830. The second iron ore reducing unit 810 or the first iron ore reducing unit 830 may be a fluidized-bed reduction furnace.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

**Claims**

1. An apparatus for manufacturing molten iron comprising:

   a melter-gasifier (110, 820) for producing molten iron and generating off-gases;
   a carbon dioxide reforming unit (120) for reforming the off-gases and generating hydrogen and carbon monoxide;
   an iron ore reducing unit (130, 830) for receiving the hydrogen and the carbon dioxide to reduce iron ore;
   an off-gas refining facility (140) installed between the melter-gasifier (110) and the carbon dioxide reforming unit (120), and
   a steam reforming unit (210) installed between the melter-gasifier (110) and the carbon dioxide reforming unit (120),
   wherein the steam reforming unit (210) brings the steam among the off-gases into reaction with carbon monoxide to produce hydrogen, and
   wherein the off-gas refining facility (140) refines harmful substances in the off-gases.

2. The apparatus for manufacturing molten iron of claim 1, wherein
   the off-gas refining facility (140) includes at least one of a cyclone, a filter, and a scrubber.

3. The apparatus for manufacturing molten iron of claim 1, further comprising
   a gas distributing unit (170) installed between the carbon dioxide reforming unit (120) and the iron ore reducing unit (130),
   wherein the gas distributing unit (170) supplies some of the hydrogen and the carbon monoxide generated by the carbon dioxide reforming unit (120) to the melter-gasifier (110) and supplies the remaining hydrogen and carbon monoxide to the iron ore reducing unit (130).

4. The apparatus for manufacturing molten iron of claim 1, further comprising
   a first heat exchanger (180),
   wherein the first heat exchanger (180) supplies heat generated by the melter-gasifier (110) to the carbon dioxide reforming unit (120).

5. The apparatus for manufacturing molten iron of claim 1, further comprising
   a steam separating unit (150) connected to the iron ore reducing unit (130),
   wherein the steam separating unit (150) separates and removes water generated by the iron ore reducing unit (130).

6. The apparatus for manufacturing molten iron of claim 5, further comprising
   an electric power generating unit (160) connected to the steam separating unit (150),
   wherein the electric power generating unit (160) receives steam and mixed gas from the steam separating unit (150) to produce electrical energy.

7. The apparatus for manufacturing molten iron of claim 6, wherein
   the electric power generating unit (160) is a turbine.

8. The apparatus for manufacturing molten iron of claim 1, further comprising
   a liquid fuel producing unit (310) connected to the iron ore reducing unit (130),
   wherein the liquid fuel producing unit (310) receives mixed gas from the iron ore reducing unit (130) and produces a liquid fuel.

9. The apparatus for manufacturing molten iron of claim 8, wherein the liquid fuel produced by the liquid fuel producing unit (310) includes at least one of methanol, di-methyl ether, and a hydrocarbon.

10. The apparatus for manufacturing molten iron of claim 8, wherein the liquid fuel producing unit (310) is a slurry reactor.

11. The apparatus for manufacturing molten iron of claim 8, further comprising
a second heat exchanger (330),
wherein the second heat exchanger (330) supplies heat generated by the liquid fuel producing unit (310) to the carbon dioxide reforming unit (120).

12. The apparatus for manufacturing molten iron of claim 8, further comprising
a compressor (320) installed between the iron ore reducing unit (130) and the liquid fuel producing unit (310).

13. The apparatus for manufacturing molten iron of claim 9, further comprising
an electric power generating unit (160) connected to the liquid fuel producing unit (310),
wherein the electric power generating unit (160) receives steam and mixed gas from the liquid fuel producing unit (310) and produces electrical energy.

14. The apparatus for manufacturing molten iron of claim 13, wherein the electric power generating unit (160) is a turbine.

15. The apparatus for manufacturing molten iron of claim 13, further comprising
a carbon dioxide separating unit (410) installed between the liquid fuel producing unit (310) and the electric power generating unit (160),
wherein the carbon dioxide separating unit (410) separates carbon dioxide from the mixed gas and sends the carbon dioxide to the carbon dioxide reforming unit (120).

16. The apparatus for manufacturing molten iron of claim 15, wherein the carbon dioxide separating unit (410) is a PSA unit, or separates carbon dioxide by using one of a cryogenic process, an ammonia/amine adsorbing process, an adsorbent using process, an MOF, and a membrane separation process.

17. The apparatus for manufacturing molten iron of Claim 1, further comprising:
a second iron ore reducing unit (810) for reducing iron ore and manufacturing reduced iron; wherein the melter-gasifier is supplied from the second iron ore reducing unit with the reduced iron.

18. The apparatus for manufacturing molten iron of claim 17, further comprising
a gas distributing unit (170) installed between the carbon dioxide reforming unit (120) and the first and second iron ore reducing units (830),
wherein the gas distributing unit (170) supplies some of the hydrogen and the carbon monoxide generated by the carbon dioxide reforming unit (120) to the first iron ore reducing unit (810) and supplies the remaining hydrogen and carbon monoxide to the second iron ore reducing unit (830).

19. The apparatus for manufacturing molten iron of claim 17 or 18, wherein
the first iron ore reducing unit (810) or the second iron ore reducing unit (830) is a fluidized-bed reduction furnace.

**Patentansprüche**

1. Vorrichtung zum Herstellen von geschmolzenem Eisen, Folgendes umfassend:

einen Schmelzvergaser (110, 820) zum Erzeugen von geschmolzenem Eisen und Erzeugen von Abgasen;
eine Kohlendioxidreformiereinheit (120) zum Reformieren der Abgase und zum Erzeugen von Wasserstoff und Kohlenmonoxid;
eine Eisenerzreduktionseinheit (130, 830) zum Aufnehmen des Wasserstoffs und des Kohlendioxids, um Eisenerz zu reduzieren;
eine Abgasreinigungsanlage (140), die zwischen dem Schmelzvergaser (110) und der Kohlendioxidreformiereinheit (120) installiert ist, und eine Dampfreformiereinheit (210), die zwischen dem Schmelzvergaser (110) und der Kohlendioxidreformiereinheit installiert ist (120), wobei die Dampfreformiereinheit (210) den Dampf zwischen den Abgasen mit Kohlenmonoxid zur Reaktion bringt, um Wasserstoff zu erzeugen, und wobei die Abgasreinigungsanlage (140) schädliche Substanzen in den Abgasen verfeinert.

2. Vorrichtung zum Herstellen von geschmolzenem Eisen nach Anspruch 1, wobei die Abgasreinigungsanlage (140) mindestens einen aus einem Zyklon, einem Filter und einem Wäscher enthält.

3. Vorrichtung zum Herstellen von geschmolzenem Eisen nach Anspruch 1, ferner eine Gasverteilungseinheit (170) umfassend, die zwischen der Kohlendioxidreformiereinheit (120) und der Eisenerzreduktionseinheit (130) installiert ist, wobei die Gasverteilungseinheit (170) einen Teil des Wasserstoffs und des von der Kohlendioxidreformiereinheit (120) erzeugten Kohlenmonoxids an den Schmelzvergaser (110) liefert und den restlichen Wasserstoff und Kohlenmonoxid an die Eisenerzreduktionseinheit (130) liefert.

4. Vorrichtung zum Herstellen von geschmolzenem Eisen nach Anspruch 1, ferner einen ersten Wärmetauscher (180) umfassend, wobei der erste Wärmetauscher (180) von dem Schmelzvergaser erzeugte Wärme (110) an die Kohlendioxidreformiereinheit (120) liefert.

5. Vorrichtung zum Herstellen von geschmolzenem Eisen nach Anspruch 1, ferner umfassend eine Dampftrenneinheit (150), die mit der Eisenerzreduktionseinheit (130) verbunden ist, wobei die Dampftrenneinheit (150) durch die Eisenerzreduktionseinheit (130) erzeugtes Wasser trennt und entfernt.

6. Vorrichtung zum Herstellen von geschmolzenem Eisen nach Anspruch 5, ferner eine Elektrizitätserzeugungseinheit (160) umfassend, die mit der Dampftrenneinheit (150) verbunden ist, wobei die Elektrizitätserzeugungseinheit (160) Dampf und Mischgas aus der Dampftrenneinheit erhält (150), um elektrische Energie zu erzeugen.

7. Vorrichtung zum Herstellen von geschmolzenem Eisen nach Anspruch 6, wobei die Elektrizitätserzeugungseinheit (160) eine Turbine ist.

8. Vorrichtung zum Herstellen von geschmolzenem Eisen nach Anspruch 1, ferner eine Flüssigbrennstofferzeugungseinheit (310) umfassend, die mit der Eisenerzreduziereinheit verbunden ist, wobei die Flüssigbrennstofferzeugungseinheit (310) Mischgas aus der Eisenerzreduktionseinheit (130) erhält und einen Flüssigbrennstoff erzeugt.

9. Vorrichtung zum Herstellen von geschmolzenem Eisen nach Anspruch 8, wobei der durch die Flüssigbrennstofferzeugungseinheit (310) erzeugte Flüssigbrennstoff Methanol, Dimethylether und/oder einen Kohlenwasserstoff enthält.

10. Vorrichtung zum Herstellen von geschmolzenem Eisen nach Anspruch 8, wobei die Flüssigbrennstofferzeugungseinheit (310) ein Suspensionsreaktor ist.

11. Vorrichtung zum Herstellen von geschmolzenem Eisen nach Anspruch 8, ferner einen zweiten Wärmetauscher (330) umfassend, wobei der zweite Wärmetauscher (330) durch die Flüssigbrennstofferzeugungseinheit (310) erzeugte Wärme an die Kohlendioxidreformiereinheit (120) liefert.

12. Vorrichtung zum Herstellen von geschmolzenem Eisen nach Anspruch 8, ferner einen Kompressor (320) umfassend, der zwischen der Eisenerzreduktionseinheit (130) und der Flüssigbrennstofferzeugungseinheit (310) installiert ist.

13. Vorrichtung zum Herstellen von geschmolzenem Eisen nach Anspruch 9, ferner eine Elektrizitätserzeugungseinheit (160) umfassend, die mit der Flüssigbrennstofferzeugungseinheit (310) verbunden ist, wobei die Elektrizitätserzeugungseinheit (160) Dampf und Mischgas aus der Flüssigbrennstofferzeugungseinheit (310) erhält und elektrische Energie erzeugt.

14. Vorrichtung zum Herstellen von geschmolzenem Eisen nach Anspruch 13, wobei die Elektrizitätserzeugungseinheit (160) eine Turbine ist.

15. Vorrichtung zum Herstellen von geschmolzenem Eisen nach Anspruch 13, ferner eine Kohlendioxidtrenneinheit (410) umfassend, die zwischen der Flüssigbrennstofferzeugungseinheit (310) und der Elektrizitätserzeugungseinheit (160) installiert ist, wobei die Kohlendioxidtrenneinheit (410) Kohlendioxid aus dem Mischgas trennt und das Kohlendioxid zur Kohlendioxidreformiereinheit (120) schickt.

**16.** Vorrichtung zum Herstellen von geschmolzenem Eisen nach Anspruch 15, wobei die Kohlendioxidtrenneinheit (410) eine PSA-Einheit ist, oder Kohlendioxid mithilfe eines kryogenen Vorgangs, eines Ammoniak-/Amin-Adsorptionsvorgangs, eines Vorgangs mit einem Adsorptionsmittel, eines MOF oder eines Membrantrennverfahrens trennt.

**17.** Vorrichtung zum Herstellen von geschmolzenem Eisen nach Anspruch 1, ferner Folgendes umfassend:
eine zweite Eisenerzreduktionseinheit (810) zum Reduzieren von Eisenerz und zum Herstellen von reduziertem Eisen; wobei der Schmelzvergaser aus der zweiten Eisenerzreduktionseinheit mit dem reduzierten Eisen versorgt wird.

**18.** Vorrichtung zum Herstellen von geschmolzenem Eisen nach Anspruch 17, ferner eine Gasverteilungseinheit (170) umfassend, die zwischen der Kohlendioxidreformiereinheit (120) und der ersten und der zweiten Eisenerzreduktionseinheit (830) installiert ist, wobei die Gasverteilungseinheit (170) einen Teil des Wasserstoffs und des von der Kohlendioxidreformiereinheit (120) erzeugten Kohlenmonoxids an die erste Eisenerzreduktionseinheit (810) liefert und den restlichen Wasserstoff und Kohlenmonoxid an die zweite Eisenerzreduktionseinheit (830) liefert.

**19.** Vorrichtung zum Herstellen von geschmolzenem Eisen nach Anspruch 17 oder 18, wobei die Eisenerzreduktionseinheit (810) oder die zweite Eisenerzreduktionseinheit (830) ein Wirbelschicht-Reduktionsofen ist.

**Revendications**

**1.** Appareil de fabrication de fer en fusion comprenant :

une cuve de gazéification-fusion (110, 820) destinée à produire du fer fondu et à générer des effluents gazeux ;
une unité de reformage de dioxyde de carbone (120) destinée à reformer les effluents gazeux et à générer de l'hydrogène et du monoxyde de carbone ;
une unité de réduction de minerai de fer (130, 830) destinée à recevoir l'hydrogène et le dioxyde de carbone afin de réduire le minerai de fer ;
une installation de raffinage d'effluents gazeux (140) installée entre la cuve de gazéification-fusion (110) et l'unité de reformage de dioxyde de carbone (120), et une unité de reformage à la vapeur (210) installée entre la cuve de gazéification-fusion (110) et l'unité de reformage de dioxyde de carbone (120), dans laquelle l'unité de reformage à la vapeur (210) fait réagir la vapeur parmi les effluents gazeux avec le monoxyde de carbone pour produire de l'hydrogène et dans laquelle l'installation de raffinage des effluents gazeux (140) raffine des substances nocives dans les effluents gazeux.

**2.** Appareil de fabrication de fer en fusion selon la revendication 1, dans lequel l'installation de raffinage des effluents gazeux (140) comprend au moins un cyclone, un filtre et un laveur.

**3.** Appareil de fabrication de fer en fusion selon la revendication 1, comprenant en outre une unité de distribution de gaz (170) installée entre l'unité de reformage de dioxyde de carbone (120) et l'unité de réduction de minerai de fer (130), dans lequel une unité de distribution de gaz (170) fournit une partie de l'hydrogène et du monoxyde de carbone générés par l'unité de reformage de dioxyde de carbone (120) à la cuve de gazéification-fusion (110) ainsi que l'hydrogène et le monoxyde de carbone restants à l'unité de réduction de minerai de fer (130).

**4.** Appareil de fabrication de fer en fusion selon la revendication 1, comprenant en outre un premier échangeur thermique (180), dans lequel le premier échangeur thermique (180) fournit de la chaleur générée par la cuve de gazéification-fusion (110) à l'unité de reformage de dioxyde de carbone (120).

**5.** Appareil de fabrication de fer en fusion selon la revendication 1, comprenant en outre une unité de séparation de vapeur (150) connectée à l'unité de réduction de minerai de fer (130), dans lequel l'unité de séparation de vapeur (150) sépare et élimine l'eau générée par l'unité de réduction de minerai de fer (130).

**6.** Appareil de fabrication de fer en fusion selon la revendication 5, comprenant en outre une unité générant de l'énergie électrique (160) connectée à l'unité de séparation de vapeur (150), dans lequel l'unité générant de l'énergie électrique (160) reçoit de la vapeur et du gaz mélangé depuis l'unité de séparation de vapeur (150) afin de produire de l'énergie électrique.

**7.** Appareil de fabrication de fer en fusion selon la revendication 6, dans lequel l'unité générant de l'énergie électrique (160) est une turbine.

8. Appareil de fabrication de fer en fusion selon la revendication 1, comprenant en outre une unité de production de combustible liquide (310) connectée à l'unité de réduction de minerai de fer, dans lequel l'unité de production de combustible liquide (310) reçoit du gaz mélangé provenant de l'unité de réduction de minerai de fer (130) et produit un combustible liquide.

9. Appareil de fabrication de fer en fusion selon la revendication 8, dans lequel le combustible liquide produit par l'unité de production de combustible liquide (310) comprend au moins un élément parmi le méthanol, l'éther de diméthyle et un hydrocarbure.

10. Appareil de fabrication de fer en fusion selon la revendication 8, dans lequel l'unité de production de combustible liquide (310) est un réacteur à suspension.

11. Appareil de fabrication de fer en fusion selon la revendication 8, comprenant en outre un deuxième échangeur thermique (330), dans lequel le deuxième échangeur thermique (330) fournit la chaleur générée par l'unité de production de combustible liquide (310) à l'unité de reformage de dioxyde de carbone (120).

12. Appareil de fabrication de fer en fusion selon la revendication 8, comprenant en outre un compresseur (320) installé entre l'unité de réduction de minerai de fer (130) et l'unité de production de combustible liquide (310).

13. Appareil de fabrication de fer en fusion selon la revendication 9, comprenant en outre une unité générant de l'énergie électrique (160) connectée à l'unité de production de combustible liquide (310), dans lequel l'unité générant de l'énergie électrique (160) reçoit de la vapeur et du gaz mélangé provenant de l'unité de production de combustible liquide (310) et produit de l'énergie électrique.

14. Appareil de fabrication de fer en fusion selon la revendication 13, dans lequel l'unité générant de l'énergie électrique (160) est une turbine.

15. Appareil de fabrication de fer en fusion selon la revendication 13, comprenant en outre une unité de séparation de dioxyde de carbone (410) installée entre l'unité de production de combustible liquide (310) et l'unité générant de l'énergie électrique (160), dans lequel l'unité de séparation de dioxyde de carbone (410) sépare le dioxyde de carbone du gaz mélangé et envoie le dioxyde de carbone à l'unité de reformage de dioxyde de carbone (120).

16. Appareil de fabrication de fer en fusion selon la revendication 15, dans lequel l'unité de séparation de dioxyde de carbone (410) est une unité d'adsorption par inversion de pression (Pressure Swing Adsorption - PSA), ou sépare le dioxyde de carbone en utilisant l'un des processus suivants : un processus cryogénique, un processus d'adsorption d'ammoniac/d'amine, un processus utilisant de l'adsorbant, un MOF et un processus de séparation de la membrane.

17. Appareil de fabrication de fer en fusion selon la revendication 1, comprenant en outre :
une seconde unité de réduction de minerai de fer (810) destinée à réduire le minerai de fer et à fabriquer du fer réduit ; dans laquelle la cuve de gazéification-fusion est alimentée en fer réduit par la deuxième unité de réduction de minerai de fer.

18. Appareil de fabrication de fer en fusion selon la revendication 17, comprenant en outre une unité de distribution de gaz (170) installée entre l'unité de reformage de dioxyde de carbone (120) et la première et la seconde unité de réduction de minerai de fer (830), dans lequel l'unité de distribution de gaz (170) fournit une partie de l'hydrogène et du monoxyde de carbone générés par l'unité de reformage de dioxyde de carbone (120) à la première unité de réduction de minerai de fer (810) et fournit le reste d'hydrogène et de monoxyde de carbone à la deuxième unité de réduction de minerai de fer (830).

19. Appareil de fabrication de fer en fusion selon la revendication 17 ou 18, dans lequel la première unité de réduction de minerai de fer (810) ou la seconde (830) est un four de réduction à lit fluidisé.

# FIG.1

EP 2 520 674 B1

# FIG.2

EP 2 520 674 B1

FIG.3

EP 2 520 674 B1

# FIG.4

EP 2 520 674 B1

# FIG.5

EP 2 520 674 B1

# FIG.6

EP 2 520 674 B1

FIG.7

# FIG.8

EP 2 520 674 B1

**EP 2 520 674 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020090131399
- WO 2008078891 A
- WO 2009037587 A
- JP H059140 B